# EUROPEAN PATENT APPLICATION

(11) **EP 1 622 305 A1**
(43) Date of publication of application: **01.02.2006**
(21) Application number: 04291922.5
(22) Date of filing: 28.07.2004
(51) Int. Cl.: H04L 12/24

(54) **Method and apparatus for network monitoring**

(71) Applicant: Hitachi, Ltd., Chiyoda-ku, Tokyo 100-8010 (JP)
(72) Inventor: Yoshimoto, Akio, 06110 Le Cannet (FR)
(74) Representative: Beetz & Partner

(57) **Abstract**

This invention relates to a method and an apparatus for monitoring a plurality of network nodes in a communication network, in particular an ad-hoc network. The method for monitoring a plurality of network nodes (20, 20A, 20B) in a communication network (30), comprises the following steps: sending a monitoring request RQ to at least two network nodes (20, 20A, 20B) for instructing the receiving network nodes (20, 20A, 20B) to periodically send information messages IM comprising monitored information; and receiving information messages IM from responding network nodes (20, 20A, 20B). A monitoring request RQ may comprise data for specifying information to be monitored at a network node (20, 20A, 20B) receiving the monitoring request RQ and data to indicate a monitoring time period Tp.

## Description

This invention relates to a method and an apparatus for monitoring a plurality of network nodes in a communication network, in particular an ad-hoc network.

In many communication networks there is the problem of monitoring and managing network nodes, *e*.*g*. hosts, routers, gateways or other devices connected to the network. For example, in networks based on the internet standard, *i*.*e*., TCP/IP based networks, SNMP (simple network management protocol, cf. RFC 1098) provides means for network managers to access information stored in a management information base (MIB) on a network device, if a SNMP agent is running on the device. SNMP provides a protocol for the communication between a manager and agents, and standardized MIBs so as to allow the monitoring of a heterogeneous network having network nodes of different kinds. However, SNMP is assigned for a one-to-one communication between monitor and agent, and the primary focus of the protocol is on the polling of information. Thus, if information from many network nodes is requested, a respective number of individual requests to the agents must be generated by the monitor and transmitted via the network. In addition, SNMP provides no means for instructing the agents to respond periodically by sending the requested information repeatedly. Thus, if the monitor needs a continuous update of information, it must send repeated requests to each individual network node.

These problems become particularly important for the network management of ad-hoc networks. A mobile ad-hoc network (MANET) is a collection of mobile nodes that communicate using a wireless medium, thereby forming an autonomous network. The communication of network nodes is performed either by direct wireless links or by multi-hop routes spanning a plurality of wireless links. In order to enable multi-hop routes, the network nodes usually incorporate routing capabilities. In general, MANETs have dynamic, random, sometimes rapidly changing topologies, limited bandwidths, and variable throughput links.

For monitoring or managing an ad-hoc network it is often to receive network information from a plurality of network nodes within the entire ad-hoc network or a large part thereof. In order to monitor the connectivity between nodes continuously, it is necessary to control the respective information from the ad-hoc nodes repeatedly. In addition, under consideration of the available limited bandwidth, the collection of information from the ad-hoc nodes must be efficient. Thus, the above limitations of SNMP are particularly significant.

When applying SNMP to ad-hoc networks, it generates heavy traffic due to the large number of individual request and reply packets. In particular, the large number of reply packets from the network nodes traveling towards the monitor node concentrates in the network in the vicinity of the network monitor and may overload the network bandwidth. Furthermore, since request and reply packets must be transmitted through intermediate nodes to travel to and from more distant nodes, which may not be reached with a single hop, an underlying unicast routing protocol is necessary to operate SNMP in an ad-hoc network. Thus, SNMP depends on the operability of the unicast routing protocol and does not operate independently thereof. Accordingly, it may not be used to monitor or manage the network when the unicast routing is inoperable.

It is an object of the present invention to solve the above problems of the prior art and to provide an efficient method and apparatus for monitoring a plurality of network nodes in a communication network.

This object is achieved by the independent claims. The dependent claims relate to preferred embodiments of the invention.

A method for monitoring a plurality of network nodes in a communication network comprises the sending of a monitoring request to a plurality (at least two) of the network nodes in the communication network. This enables a network monitor to reach a plurality of nodes with a single monitoring request and, thus, reduces the network traffic induced by the transmission of the monitoring request. Preferably, the monitoring request is transmitted to the plurality of network nodes by broadcast or multicast so that the request is considered by all nodes receiving it or by the respective nodes in the multicast group, respectively.

The monitoring request may be configured to specify the information which is to be monitored at a network node receiving it. Thus, it is possible to indicate any kind of demanded information which is available on the network nodes and select it for monitoring. The information to be monitored may also be pre-configured in the monitored node, and the monitoring request, which does not specify the information in this case, serves to trigger the monitoring process when received by a monitored node. The requested information may correspond to information relating to the node itself or to network information concerning the node. For example, the network manager may collect information such as battery status of the monitored node, routing information, neighbor information of the node, *e*.*g*. link status, signal level, traffic amount, link error rate, etc.. The information may be stored and organized at the node in a management information base (MIB), *e.g*. as defined by SNMP of any other database. This has the advantage that a variety of information may be monitored by the present invention. Categories defined by SNMP may be used for the access to the information,.

According to the invention, a network node receiving the monitoring request is instructed by the monitoring request to periodically send information messages (also called monitoring responses) to the network monitor. This has the advantage that a single monitoring request may actuate a series of periodic information messages which each comprise the requested information from the network node. By receiving information messages from network nodes, the network monitor is able to monitor/control the network and/or the network nodes permanently without having the task of repeatedly sending a large number of monitoring requests. This reduces the computational load for the network monitor which may concentrate on analyzing and/ or displaying the received information.

Thus, according to the present invention, an efficient network monitoring method is provided which allows an easy monitoring of a large number of network nodes. The above method may be implemented on any communication network, such as a TCP/IP based network or an ad-hoc network. It is particularly useful if the MAC layer (media access layer) of the network provides broadcast or multicast routing so that the monitoring requests are easily transmitted to a plurality of nodes.

It is particularly reasonable to use the method according to the present invention for monitoring network information which may be applied for the management of the communication network. The method allows an efficient collection of information from the network nodes and provides for real-time network monitoring. The network management may comprise analyzing the statistics of the network information and improving the network throughput, performance, etc. The invention further allows efficiently monitoring the connectivity between the individual network nodes, which depends on the (radio) signal coverage of the individual nodes. Since signal coverage and connectivity are closely related with the positions of the nodes in an ad-hoc network, the collection of the respective information may be used in network management to deploy or rearrange nodes in order to establish a stable network.

A monitoring request preferably indicates a monitoring time period for use by a receiving network node in order to organize the transmission of the periodic information messages according to the received monitoring time period. Thus, the network monitor may instruct the scheduling of the periodic transmissions of the monitored nodes.

The monitoring time period may also be predefined, *e.g*. as a network system constant, for the entire network, individual nodes, or groups of nodes. The monitoring time period may also be specified or distributed by other means, input by a user or operator, or broadcast in separate messages, etc.

Upon receiving a monitoring request, a network node may set a timer based on the monitoring time period. Each time when the timer expires the node may send a periodic information message to the network monitor. Preferably, the node then resets the timer for the next monitoring time period so that a periodic sequence of information messages is generated.

The method may further comprise, upon receiving a monitoring request from the network monitor, the step of setting an expiration time interval. The network node preferably sends information messages periodically to the network monitor until the expiration time interval elapses. This allows for an autonomous sending of information messages by the monitored node for a controlled period of time. When a new monitoring request is received by a network node, the node may reschedule the expiration time interval. By setting the expiration time interval appropriately, the monitored network nodes may send the requested information repeatedly to the network monitor without the need of being polled individually each time. Thus, the number of monitoring requests and the consumed network bandwidth may be further reduced. On the other hand, the expiration time interval prevents network nodes, which do not receive more monitoring requests, from sending information messages without a limitation. Based on the above feature, a node will terminate responding after the expiration time interval elapses and no new request is received. Thus, a node which is separated in the network from the network monitor and which does not receive a termination request will be stopped automatically after the expiration time interval has expired. This provides for an automatic safeguard of the monitoring method and prevents excessive flooding of the network with un-requested information messages.

A network node which receives a monitoring request may preferably forward the received monitoring request in a downstream direction (away from the monitor) to other nodes if a predetermined relay condition is met. This has the advantage that the request is distributed to other network nodes in the network, which may not have received the request from the monitor. This relay mechanism floods the monitoring requests in the network and extends the coverage of the monitored region of the network. In order to avoid a network congestion caused by several nodes simultaneously forwarding received monitoring requests, it is preferred to wait for a random delay time before forwarding a received monitoring request. Thus, the flooding of the request packets in the network is spread out in time and the network load is reduced. In order to limit the network flooding to a certain definable region, the predetermined condition may be tested by a receiving network node before relaying the received request. Any condition which may restrict the geographic extent of flooding in the network is suitable. A relay condition, *e.g*., may identify a certain subnet in a network, which is to be flooded with monitoring requests, or specify a certain time period for which the request is to be relayed.

As an alternative to the above request relay mechanism, the autonomous periodic sending procedure described above for the periodic sending of information messages may also be applied to the distribution of request messages. Upon receiving a monitoring request, a network node may test whether the received monitoring request meets the predetermined forward condition, and in the positive, schedule a periodic timer which triggers the sending of a monitoring request each time when the timer expires. This allows, once initiated by the monitoring node, an autonomous distribution of secondary request messages in the network, and separates the process of sending monitoring requests, performed by an intermediate "relay" node, from the reception of corresponding requests from upstream nodes. Thus, the supply of monitoring requests (and the backwards flow of corresponding information messages) is not interrupted when a request is lost.

The secondary request message sent by a node which is not a network monitoring node may request the same monitored information as indicated in a monitoring request received by the node from an upstream node (either from the network monitor or from another intermediate node). If a node receives different monitoring requests from upstream nodes, the requested information may also be aggregated and a secondary request message may indicate the collective requested information from the plurality of the received monitoring requests. This concentrates request messages and further reduces network traffic.

Preferably, the time set at the request message timer corresponds to the monitoring time period also used for triggering the sending of information messages so that a correspondence between monitoring requests and information messages exists. However, the set time for sending periodic secondary monitoring requests may also be different; in particular it may be longer than the monitoring time period. In order to allow a continuous monitoring of the wanted information, it is preferred that the expiration time is longer than the time interval for sending secondary request messages. In this case, a new monitoring request arrives at a monitored node before the expiration time interval elapses, and the sending of information messages is not discontinued.

In addition, the introduction of a random delay time may be used to avoid packet collisions. Thus, the secondary monitoring requests are not sent according to a strict timing schedule but based on some jitter which reduces the likelihood that several intermediate nodes send request messages simultaneously.

A network node which sends secondary monitoring requests may further schedule a timer with an expiration time interval each time when receiving a monitoring request. The node may then discontinue sending secondary monitoring requests when the expiration time interval expires before a new monitoring request is received. This provides a safeguard against an uncontrolled flow of monitoring requests in the network because the timer operates as a watchdog timer supervising the sending of secondary request messages for nodes which are not network monitors.

Preferably, a set of network nodes to be monitored is determined based on a network distance condition. The network distance condition may specify a distance to the network monitor within which a received monitoring request is to be forwarded. The network distance condition may be specified by any particular network distance metric, such as a packet hop-count. This allows a preferred limitation of the selected network area to be flooded by limiting the number of network links from the network monitor to the concerned nodes and is particularly useful for mobile ad-hoc networks. The network distance condition may also be applied when an intermediate node tests whether it should start the above described periodic sending of secondary monitoring requests.

The monitoring requests and/or information messages are preferably transmitted in the network in packets. A monitoring packet may include information relating to the monitoring time period, such as the time interval in milliseconds or seconds. It is convenient to adapt the packet size to the MAC frame size of the deployed network so that no dispensable fragmentation of the packets occurs. A packet may comprise a broadcast flag to indicate that the packet is intended for all network nodes which are able to receive the broadcast packet. By this means, a monitoring request packet may be transmitted to all nodes which meet the network distance condition and, thus, are members of the specified network node set. Further, it allows using a common packet format for monitoring requests and information messages, wherein, if the packet broadcast flag is set, the packet is transmitted by broadcast or multicast. In doing so, the monitoring requests are distributed to the specified set of network nodes. Preferably, the broadcast or multicast transmission may be applied when monitoring requests are sent by the monitor and/or when monitoring requests are relayed by intermediate nodes in the downstream direction.

A monitoring request and/or an information message may comprise(s) a security information field to determine whether the received monitoring request and/or information message is authentic. The security information field may also be used to determine whether the received content of the packet has been tampered with. A secure communication between network manager and nodes for authentication, privacy, and access control may be achieved by applying, e.g., SNMP security mechanisms. E.g. message digest with shared string and/or shared key mechanisms may be used in order to avoid that monitoring requests and/or information messages are impersonated.

In order to allow responses from network nodes, which are not directly linked to the monitor, to be transmitted over several network links, it is suitable that a network node, which receives an information message, relays the received information message in the upstream direction. Thus, the relayed information message may subsequently be received by the network monitor or other nodes which also relay the response. This allows distributing information messages in the network in an upstream direction towards the monitor. In order to avoid packet collisions, it is preferred that the node waits for a random delay time before relaying the received information message.

Preferably, a network node which receives a monitoring request performs the step of determining a particular upstream network node to be the next packet destination for sending the information messages upstream towards the network monitor. Thus, it is avoided to flood the network with information messages in order to transmit them to the monitor. This step allows transmitting information messages on a direct path via a minimum number of intermediate relay nodes towards the network monitor node. For this purpose, a network node, when receiving a monitoring request, may record the identity or address of the node from which it has received the request. By recording the identity or network address of the directly connected upstream neighbor node which has sent the monitoring request to the receiving node, the node may identify the preferred next packet destination in a upstream direction, *i*.*e*., the direction towards the network monitor node. A hierarchical tree of nodes for guiding information messages to the network monitor, which is arranged at the tree root, develops autonomously that way in the network. Monitoring requests may travel along branches of the network tree in a downstream direction from the network monitor towards the receiving nodes arranged at the tree leaves. Information messages travel in an upstream direction along the network tree branches towards the network monitor. This desired hierarchical network tree has further the advantage that it adapts automatically to changes in the network, such as the breakdown of a node or the re-arrangement of a node. This is particularly important for mobile ad-hoc networks which have a dynamic network topology.

Furthermore, a variety of criteria may be deployed in order to determine the next upstream packet destination. Preferably, the next upstream node is determined based on link properties for network links between a node and other network nodes, such as uni- or bi-directionality of a link, available bandwidth, reliability of a link, etc. The next upstream destination may also be determined based on properties of monitoring requests received via the respective network link. For example, the upstream node from which the latest monitoring request has been received may be selected. In addition, the next upstream destination may also be determined based on properties of the transmission path of received monitoring requests. Preferably, an upstream node is selected which lies on the shortest network path having minimum distance to the network manager. The distance to the network manager may be determined, *e.g*., based on the number of hops that a request packet has traveled through the network. This hop count is also referred to as network tree index. Several of these criteria may further be applied in a given order of priority so that a cascaded decision tree is applied for determining the next upstream packet destination.

The structure of the network tree is preferably constructed based on the hop-count of monitoring requests traveling downstream from the network manager. The hop-count of a monitoring request may be part of the packet format and incremented when the packet is forwarded, or when an intermediate node sends secondary monitoring requests. The upstream link may be determined preferably based on the hop-count of a received packet. When the individual nodes determine their respective upstream links, the network tree gradually develops in the network. Thus, the network tree is not maintained in one step or at one instance but emerges incrementally as monitoring requests are distributed. The information on the tree is not centrally stored but distributed in the network nodes. According to the invention, the construction of the loop-free tree structure uses the packet relay mechanism necessary for distributing monitoring requests and information messages. This is different from other methods, which require dedicated tree setup and maintenance procedures, and reduces the cost of tree maintenance.

A monitoring request packet may comprise network neighbor information of the sending node. The neighbor information may indicate network nodes to which the sending node is directly connected and/or from which the sending node has received data packets or information before, in particular information messages. This has the advantage that a receiving node may determine whether its own node ID or network address is included in the neighbor information of the sending node. Thus, the receiving node may determine whether the network link to the sending node is a bi-directional link. This information may preferably be used to determine the upstream direction towards the network monitor, as already mentioned.

Furthermore, a network node preferably maintains a neighbor table for storing information relating to neighboring network nodes. Information may be stored in the neighbor table, which indicates the identity of network nodes which are directly connected to the node maintaining the neighbor table, i.e. accessible via a network link. In addition, information relating to link properties may be recorded in the neighbor table, *e*.*g*., whether the link is a uni-directional or bi-directional link. Neighbor table information may preferably be included in a monitoring request packet for use by the presented monitoring method itself, *e*.*g*., to determine the next upstream destination node. On the other hand, neighbor table information may also be requested from the network monitor and included in an information message.

A network node preferably maintains a management information database for storing information relating to the communication network, such as neighbor information, network link information, routing information, protocol information, etc. Also, information relating to the network node itself may be stored in the management information database, for example, the node battery status, node location information, node application information, etc. The management information database may preferably be configured as a SNMP-MIB.

In order to further reduce the upstream network traffic caused by information messages, it is preferred that network nodes aggregate monitored information before sending an information message upstream towards the network monitor. The information, which is aggregated and sent in one combined information message, may be the information of information messages, which are received from other nodes and which should be relayed, and/or information requested from the aggregating network node itself.

For aggregating monitored information, a network node may store one or more information messages received before the monitoring time period of the node expires, combine the received information with requested information of the node itself, and send a single information message comprising the combined information upstream towards the network monitor. This has the advantage that all information of information messages received at a node during the monitoring time period may be collected in the node and combined to a joint information message. Thus, it is possible to reduce a series of information messages traveling in the network to a single combined information message. This helps to prevent the flooding of the network by information message packets in the vicinity of the monitoring node.

Information messages may be merged as the response packets travel upstream along the network tree. This provides an N to 1-communication when flows from N senders (monitored nodes) are merged together as they travel towards the common receiver (network monitor) and is referred to as concast communication. The respective network tree representing potential merging nodes in the upstream direction of network traffic is called a concast tree and the respective routing pattern concast routing. Merging packets has the advantage of reducing the protocol overhead, but also generate a delay in packet transfer. The aggregation or merging of packets in a network node may be implemented with queues (waiting lists).

In order to provide a reliable upstream transmission of information messages, it is preferred to provide a re-send mechanism for taking care of response packets which are lost at transmission. Thus, the monitoring method may comprise the step of comparing an information message received from another node to information messages previously sent by the node itself in order to determine whether an information message sent before has been relayed by the other node. In this case, the previously sent information message is received back from the other node within a certain period of time. If the network nodes are aggregating monitored information during the monitoring time period (see before), it is expected that the relayed response is received within a time interval which corresponds to the monitoring time period. In this case, it is further possible that the previously sent information message has been combined with other information messages and is then included in a combined packet. Thus, in order to accurately determine whether the information has been relayed, the received information message should be analyzed to find out if the respective sent information is included. This may be performed by providing message tags to identify the information sent in individual information messages. These unique tags should be retained when combining information so that the individual items of information may be identified. By this means, a received information message packet may serve as an acknowledgement packet for previously sent packets. Accordingly, the monitoring method of the present invention may facilitate a reliable upstream communication, which is independent of the routing protocol deployed in the network, without additional costs.

If a network node determines that an information message packet has not been relayed by the other node within a predetermined time interval, the node may re-send the lost information message packet. In addition, a network link reliability counter may be incremented to count for the lost packet. This allows for a judgment of the transmission quality on the respective network link. A network link having a large number of lost packets may be considered to be unreliable. This information relating to the network link may be stored in the neighbor table or the management information database. It may be used for determining the next upstream destination node of the network tree and/ or it may be transmitted in an information message to the network monitor upon request.

According to a preferred embodiment of the invention, the monitoring method comprises a clock synchronization step to synchronize the clock of a network node to the clock of the network monitor. This may be performed by maintaining a virtual common clock with the network manager, which may be set up by time information received with a monitoring request, or by referring to a common time basis, *e*.*g*., the so called internet time, which may be initialized by a synchronization protocol, such as NTP (network time protocol).

In order to support a plurality of monitoring nodes, it is preferred that each node manages a plurality of virtual clocks or time differences with respect to the separate monitoring nodes. The requested information provided in the information messages should then be tagged with a time stamp with respect to the corresponding monitor's clock. This allows the respective monitoring nodes to assign the received information to correct time instances even though the monitored nodes do not have a common time basis and are not synchronized with the network monitor. The received information may be correctly sorted time wise and processed by the monitoring node.

The monitoring of a plurality of network nodes according to the present invention provides an efficient means for collecting requested information from a plurality of network nodes. As compared to the individual polling of nodes (such as required by SNMP), the consumed network bandwidth for requests and responses is clearly reduced. The invention allows collecting and monitoring any kind of information which is accessible on the nodes. By instructing the network nodes to send the requested information periodically, the present invention allows for a continuous or permanent monitoring. Due to the self-constructing nature of the upstream network traffic (concast tree), it is possible to operate plural network managers in a network at the same time. In order to provide a secure communication between network manager and nodes, SNMP security mechanisms for authentication, ciphering and/or access control may be deployed.

The monitoring method according to the invention operates independently of a routing protocol which may otherwise be used to route packets in the network. The transmission of monitoring requests and information messages in the network is organized by the proposed relay/ packet forward mechanism and does not depend on any routing protocol. The invention allows distributing monitoring requests in defined network regions and collecting information messages from nodes which are not directly connected to the network monitor even if no routing protocol is operating or it has failed. Thus, it has a high reliability and is failure-safe.

The present invention may preferably be applied in home networks, sensor networks and/or intelligent transport systems (ITS). However, the invention is not restricted thereto and other applications may easily be apparent to an expert in the art.

An apparatus (network monitor) for monitoring a plurality of network nodes in a communication network may comprise sending means adapted to send a monitoring request via the communication network to at least two network nodes, and receiving means adapted to receive information messages via the communication network from monitored network nodes.

A network device for use in a communication network having a plurality of network nodes may comprise receiving means adapted to receive, via the communication network, monitoring requests, and sending means adapted to periodically send information messages via the communication network to the network monitor.

It is preferred that the network device comprises timer means adapted to periodically trigger the sending of information messages based on a monitoring time period. The timer means may be rescheduled based on the monitoring time period every time an information message has been sent. Thus, the network device may respond autonomously to a received monitoring request by sending the requested monitored information periodically in a given time interval. This autonomous transmission of the requested information is performed without the need of a plurality of individual requests polling successively the individual network devices.

The network device may further comprise monitoring request forwarding means adapted to send monitoring requests to other network nodes in a downstream direction when a predetermined forward condition is met. Thus, monitoring requests are distributed in the network through network nodes which are not directly accessible to the monitor. The network area flooded with monitoring requests may be controlled by setting the relay condition.

In order to transmit information messages from distant network devices to the network monitor, intermediate network devices may comprise information message forwarding means adapted to relay a received information message in an upstream direction towards the monitor.

According to a preferred embodiment of the invention, neighbor table maintenance means adapted to store information relating to network nodes in the neighborhood of the network device are provided. The information stored in the neighbor table maintenance means may be sent relayed to network nodes having a direct link to the network device. Network links may be uni-directional or bi-directional network links. It is also possible to store information in the neighbor table indicating whether a network link, which is bi-directional in principle, has sufficient receiving signal levels in both link directions. This may be particularly important for situations having unsymmetrical link circumstances, e.g. if two nodes joined by a wireless link have different sending powers, or other asymmetric situations. In this case, even though a bi-directional link has been established between two nodes, a reasonable and reliable communication may only be performed in one direction. Such a link is referred to as a "heard link", wherein one node can hear the other, but not vice versa.

According to preferred embodiments of the invention, management information database means adapted to store information relating to the communication network and/or the network device are provided. The information stored in the management information database is preferably accessible to the network monitor via a monitoring request and the corresponding information message.

Furthermore, concast control means adapted to aggregate monitored information before sending an information message upstream towards the network monitor may be provided in the network device. The concast control means may maintain a concast tree which may indicate, in each participating network node, the upstream direction towards the monitor, and potential nodes for merging information messages flowing upstream.

The network device may further comprise transmission control means adapted to control the transmission of information messages by determining whether a sent information message has been relayed by another network node. This allows controlling the reliability of upstream traffic in the network and the re-sending of lost information message packets which have not been relayed within a predetermined period of time.

The communication network may be an ad-hoc network, in particular a wireless ad-hoc network, comprising a plurality of mobile network nodes. A mobile ad-hoc network node has preferably receiving, sending and routing capabilities. Preferred embodiments of network nodes are mobile phones, PDAs (personal digital assistants), handheld computers, computing devices equipped with wireless access means such as WLAN, etc.

These and other potential objects, features and advantages of the present invention will appear more fully from the following detailed description of preferred embodiments of the invention. It is to be understood, however, that the scope of the present invention is not limited to the given embodiments shown in the accompanying drawings, wherein
- Fig. 1: shows schematically a network monitoring apparatus and network nodes according to embodiments of the present invention;
- Fig. 2: shows schematically the topology of an ad-hoc network to be monitored;
- Fig. 3: illustrates schematically the flow of information from the manager to the network nodes (agents);
- Fig. 4: shows schematically the flow of information from the agents towards the manager;
- Fig. 5: illustrates schematically the maintenance of the concast tree;
- Fig. 6: illustrates schematically the concast routing when information is gathered by intermediate nodes during the up-stream transmission of information messages;
- Fig. 7: illustrates schematically the packet format for a monitoring protocol according to the present invention;
- Fig. 8: illustrates schematically the merging of monitored information in an intermediate node;
- Fig. 9: illustrates schematically the transmission control mechanism for ensuring a reliable transmission;
- Fig. 10: illustrates schematically the structure of an embodiment of the present invention;
- Fig. 11: shows schematically a state chart diagram for the operation of a timer component which is assigned to another periodically operating component such as the periodic observation unit;
- Fig. 12: shows schematically the flow of signals between components of a node which acts as a manager;
- Fig. 13: shows schematically the flow of signals within a network node acting as a monitoring agent;
- Fig. 14: shows schematically the packet format for a monitoring protocol according to one embodiment of the invention;
- Fig. 15: illustrates schematically a class diagram for an object oriented implementation of an embodiment of the present invention;
- Fig. 16: illustrates schematically the processing of the receiver;
- Fig. 17: shows a flow diagram for a control procedure provided in order to control the termination of a periodic observation unit;
- Fig. 18: shows a flowchart of a control process performed by the periodic observation unit;
- Fig. 19: shows a flow diagram of a control process performed by the sender component;
- Fig. 20: shows a flowchart of a control process performed by the re-send administration unit;
- Fig. 21: shows a flow diagram of a control process performed by the neighbor table maintenance unit;
- Fig. 22: illustrates schematically the operation of the analyzing and display unit;
- Fig. 23: illustrates schematically the conventional network monitoring by SNMP (simple network management protocol).

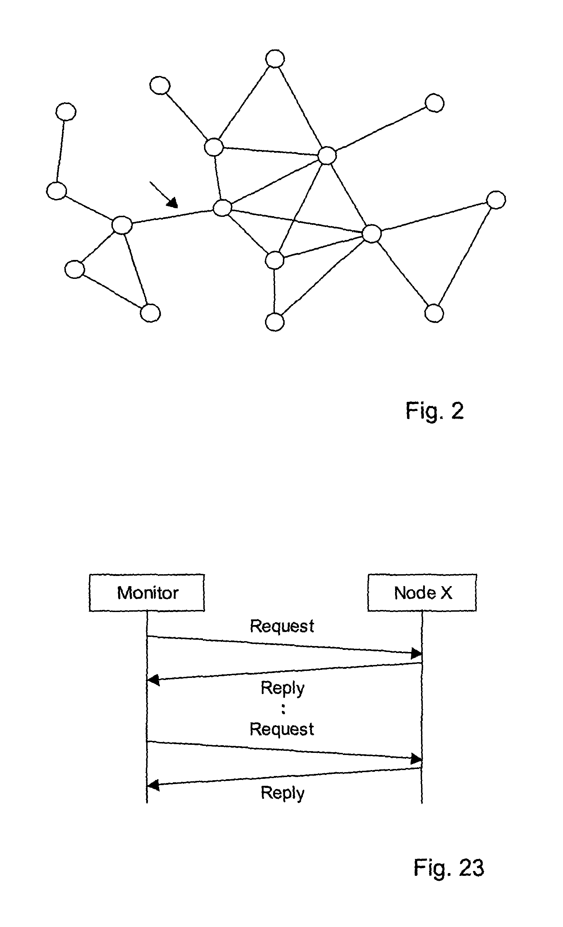

Fig. 2 shows schematically the topology of an ad-hoc network to be monitored. For the purpose of network management, an ad-hoc network monitor is interested, for example, in the emerging network connectivity, topology and/or properties of the network links. In case of an unstable connection, the network monitor needs to know the effected link in order to initiate counter measures for ensuring the operation of the network. Thus, it is important to collect the respective information on link properties from the network nodes. In the example shown in Fig. 2, the arrow indicates an unstable link which would cause the network to separate into unconnected parts when the unstable connection fails. However, if the unstable link is detected in advance, it is, e.g., possible to re-deploy some nodes at better positions or to arrange a node such that the network stability is increased by providing an additional path between the left and right subnet.

Fig. 23 illustrates schematically the conventional network monitoring by SNMP (simple network management protocol). A monitor sends a request to a network node X for requesting the necessary information. Node X replies by sending the requested information to the monitor. Since SNMP is a polling-based protocol, further requests are necessary for successive monitoring. If multiple network nodes must be queried, a respective request to every single node is necessary. Thus, SNMP is not efficient for collecting information periodically from a large number of network nodes such as often required in an ad-hoc network.

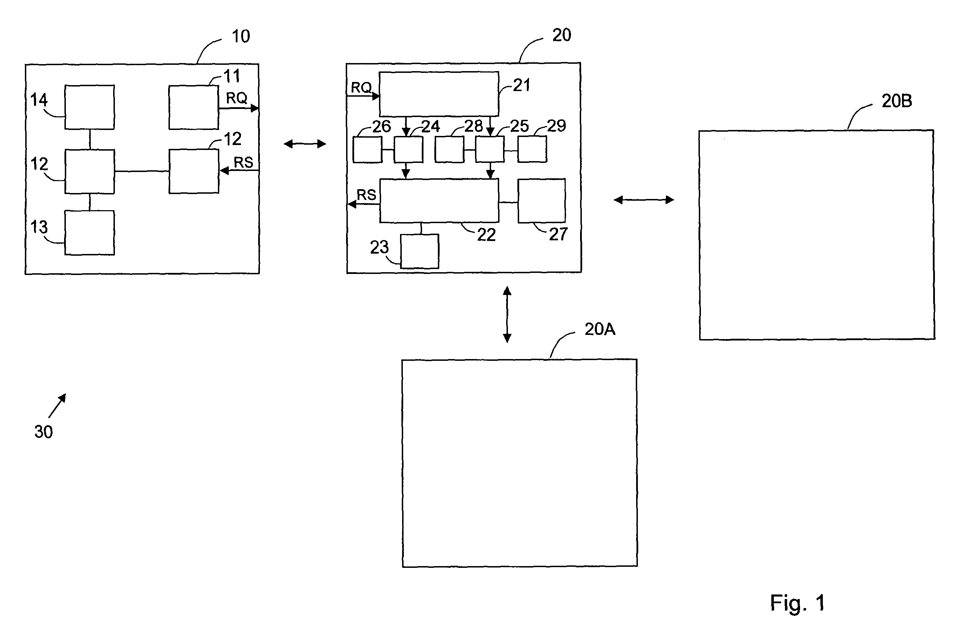

Fig. 1 shows schematically a network monitoring apparatus 10 and network nodes 20, 20A, 20B according to embodiments of the present invention.

The network manager 10 comprises monitoring request sending means 11 and information message receiving means 12. The communication network in the present embodiment is a wireless ad-hoc network 30 having a plurality of mobile network nodes 20, 20A, 20B. The monitoring request sending means 11 are adapted to send a monitoring request RQ via the communication network 30 to a plurality of network nodes 20, 20A, 20B. The monitoring request RQ specifies the information to be monitored on the network nodes which receive the monitoring request.

The monitoring request RQ is received by monitoring request receiving means 21 of the network device 20. The received request RQ instructs the network device 20 to set timer means 23 based on a monitoring time period Tp received with the monitoring request RQ. The timer means 23 are adapted to periodically trigger the sending of information messages IM (also called monitoring responses) which comprise the requested monitored information. The information is stored in a management information base (MIB).

Management information database means 27 are provided in the device 20 to store all kinds of information relating to the communication network 30, in particular information on network links connected to the network device 20, and/or information relating to the network device 20 itself. The monitoring request RQ includes a command field specifying the requested information which is analyzed by the management information database means 27 to retrieve the requested information from the MIB.

The requested information is packed in an information message IM and sent by the information message sending means 22 via the communication network 30 towards the network monitor 10.

The network monitor 10 has information message receiving means 12 adapted to receive the information message IM, and information analyzing means 12 adapted to analyze the received information from the network nodes 20, 20A, 20B. The received information may be stored in a network information database 13 and/or displayed on a display unit 14.

The network device 20 further comprises monitoring request relay means 24 adapted to relay received monitoring requests RQ to other network nodes 20A, 20B. According to the present embodiment, a monitoring request is relayed if a predetermined relay condition, here a maximum hop-count condition for the wireless ad-hoc network, is met. So other network nodes 20A, 20B further downstream from the monitor 10 also receive the monitoring requests RQ.

In order to allow information messages IM from more distant nodes 20A, 20B to be supplied to the network monitor 10, information message relay means 25, which are adapted to relay received information messages IM are provided. In addition, concast control means 28 are provided to aggregate monitored information before sending an information message IM upstream towards the network monitor 10.

Neighbor table maintenance means 26 are adapted to store information relating to network nodes 10, 20A, 20B in the neighborhood of the network device 20 in a neighbor table. The neighbor table information of the node 20 is included in a monitoring request RQ when relayed by the monitoring request relay means 24.

The transmission of information messages IM sent upstream towards the network monitor 10 is controlled by transmission control means 29. The transmission control means 29 are adapted to determine whether a sent information message IM has been relayed by another network node or must be re-sent.

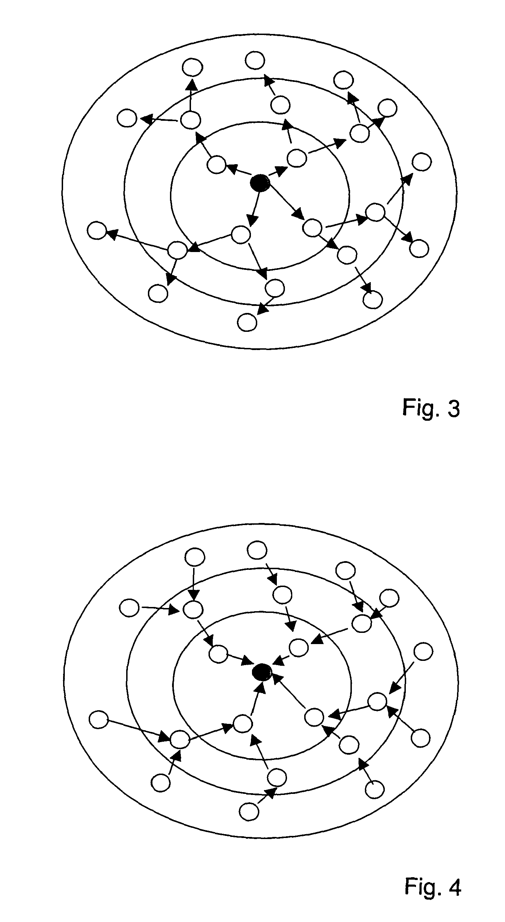

Fig. 3 illustrates schematically the flow of information from the manager to the network nodes (agents). The monitoring requests are delivered in a downstream direction by a packet flooding mechanism. Agents which receive a request packet relay the request packet, if a relay condition is met. For example, a limit on the hop-count is used to restrict the flooding of request packets. The hop-count of network links starting from the manager node is counted to create a hierarchy on which a tree structure for the concast tree is formed.

Fig. 4 shows schematically the flow of information from the agents towards the manager. Network information towards the manager is carried along upstream flows. The agents form and maintain a concast tree to deliver information to the manager. While the manager is sending request packets periodically, network nodes, which receive request packets from the manager, send information message packets towards the manager.

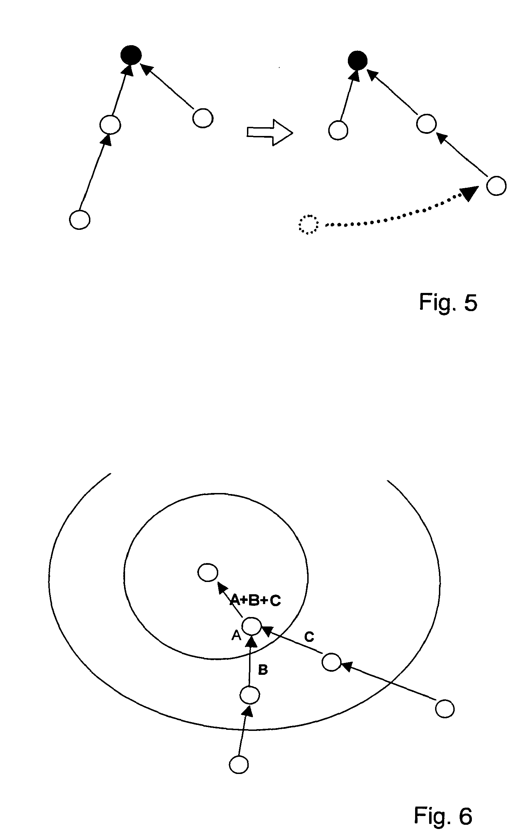

Each agent which receives request packets creates and maintains a neighbors' table which consists of a list of the nodes from which packets have arrived. The neighbors' table is included in a relayed monitoring request so that it is received by downstream nodes. Based on the received neighbors' information of upstream nodes, a downstream node may decide on its parent node to form the concast tree. This will be explained in more detail with regard to Fig. 5 and 6.

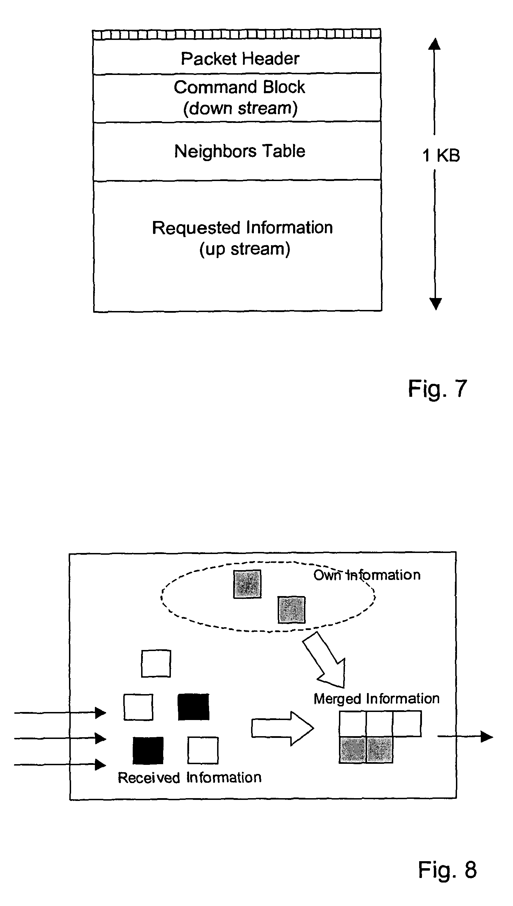

Upstream nodes, which receive information message packets from downstream nodes, merge the received information with their own information and with additional received information from other downstream nodes where applicable, create a new combined information message and send it upstream. This will be explained in more detail with regard to Fig. 7 and 8.

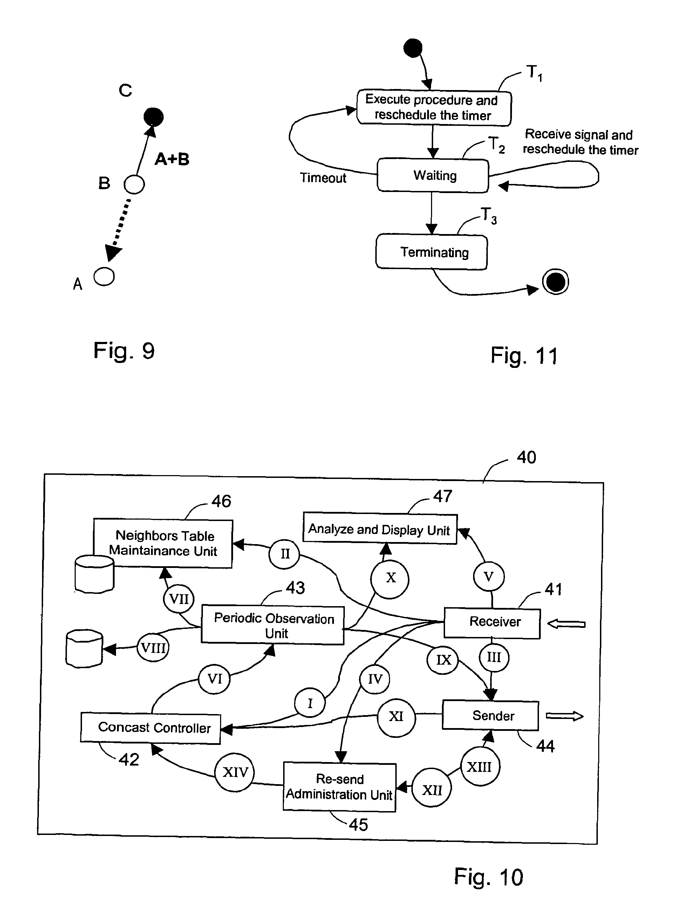

The relay procedure for received information messages is monitored by the downstream nodes in order to determine whether a reliable transmission of the upstream packets was performed. In case that no relay of a sent information message is detected by a downstream node, the response packet is re-sent so as to provide a reliable transmission. This will be explained in more detail with regard to Fig. 9.

By means of the above steps, concast flows of the requested information towards the network manager are created. The manager sorts the received information, stores, analyzes, and/or displays it. The monitoring stops when the manager stops creating request packets periodically. After not receiving request packets from upstream nodes for a while, the agents stop sending response packets and the entire monitoring process terminates.

Fig. 5 illustrates schematically the maintenance of the concast tree. Every node selects one upstream parent node among a plurality of candidate nodes from which request packets have arrived. If the network topology is such that request packets arrive only from one upstream node, the one upstream node is determined as parent node in order to form the tree hierarchy. However, if request packets are received from a plurality of nodes, a selection criterion is necessary.

In order to ensure a stable tree and to allow the control of the packet relay process, an upstream node having a bi-directional connection to the selecting node is chosen with highest priority. As already mentioned, asymmetric settings (e. g., of transmission power) are possible in an ad-hoc network, which may result in a situation where a downstream node may send packets successfully to an upstream node which in turn receives the packets and relays them. However, if the radio coverage of the upstream node is reduced compared to the downstream node, the downstream node may not receive the relayed acknowledgment packet from the upstream node so that it cannot determine whether the relay was successful or not. In this case, the downstream node would continue re-sending the packet, because it does not receive the acknowledgement. In order to allow the monitoring of the transmission reliability, it is therefore important to select an upstream node which is connected via a (fully functional) bi-directional link to the downstream node. In case of multiple candidates for upstream nodes, which are connected bi-directional, the node having the lowest packet re-sent counter may be selected as parent node. The resent counter for a link is maintained by the downstream node and increased every time a packet on the respective link is lost and must be re-sent. By using this selection criterion, it is possible to select the link having the highest transmission reliability. According to another possible selection criterion, the upstream node from which the latest request packet has arrived is selected. This allows the concast tree to be dynamically adapted to varying conditions which are very often for mobile ad-hoc networks.

Another selection criterion for the upstream parent node is based on the radio signal reception level. This allows for selecting the upstream node having the best radio transmission by means of signal strength.

Obviously, other criteria, such as the minimum network distance to the manager, *e*.*g*., indicated by the concast tree index, may also be applied. The appropriate criterion and/or the order of priority for multiple criteria may be selected according to properties of the respective communication network.

Thus, the present invention provides an automatic and autonomous configuration of the concast tree without the need for centralized control. Because every node selects an appropriate upstream parent node, no routing table is required. Furthermore, the presented tree organization and maintenance allows the dynamic adaptation of the concast tree to varying conditions as often prevailing in mobile ad-hoc networks. This is illustrated in Fig. 5 which schematically shows a situation where a node changes its upstream parent node, because it receives a new monitoring request from a different upstream node. This may happen, *e*.*g*., due to changing radio characteristics which may obscure the radio transmission between the downstream node and its previous parent node, or due to a movement of the downstream and/or parent node. Accordingly, the monitoring method of the present invention provides a dynamic tree maintenance mechanism for autonomous tree adaptation.

Fig. 6 illustrates schematically the concast routing when information is gathered by intermediate nodes during the upstream transmission of information messages. It shows the situation where a node A receives, during the monitoring time period Tp, information messages from nodes B and C. Node A aggregates the received information from B and C, combines it with its own information and sends the information message comprising the monitored information of nodes A, B, C to the network monitor.

Fig. 7 illustrates schematically a packet format for the monitoring protocol according to the present invention. The packet format consists of a header comprising concast information, a command block used for instructing the agents of downstream nodes, a neighbors' table block, and a network information block which comprises the requested information and is used for transmitting the requested information towards the manager.

The packets are sent periodically via the network and, for ad-hoc networks can be received by all network nodes in the neighborhood of the sender. This may be achieved by transmitting the packets via broadcast or multicast, if available for the deployed communication network. MAC frames may also be used. For an wireless ad-hoc network, all neighbors in the radio coverage of the sender can receive the packet. The neighbors' table in the packet may be the neighbors' table of the respective sending node. It is also possible to accumulate neighbors' information along the path when the packet travels through the network. By using the proposed monitoring packet format it is possible to implement the present monitoring protocol with only one kind of monitoring packet. Thus, the packet format serves for monitoring request packets and information message packets. Preferably, the packet size is adapted to the frame size of the MAC layer of the communication network. For example, a 1 kB packet size is proposed for an ethernet MAC frame of 1,5 kByte.

Fig. 8 illustrates schematically the merging of monitored information in an intermediate node. According to the monitoring protocol packet format, the information packets are divided in blocks. The white and black squares represent blocks of information received from other nodes during the monitoring time period Tp. The gray squares represent own information of the node which has been requested by the network monitor. The black blocks are discarded, *e*.*g*., when relay conditions do not match, and the white and gray blocks are merged into one information message packet which is then sent towards the network monitor. Relay-conditions are (1) the block relates to information directed towards the manager/monitor (i.e. the 2nd bit of the block, which indicates the command block, equals to 0); (2) the parent node information in the packet equals to the merging node's address. The agent tries to create a packet with a size of about 1 kByte in order to make full use of the packet format. This mechanism helps to reduce the network load induced by the information messages. It also helps to save necessary performance required by the hardware of the nodes for sending and receiving the packets.

Fig. 9 illustrates schematically the transmission control mechanism for ensuring a reliable transmission. In the depicted situation node A has sent an information message in the upstream direction to node B which has aggregated the received information with its own information and sent another information message packet comprising the monitored information of nodes A and B towards node C. Since broadcast packets are used to implement the transmission, every transmitted packet arrives at all nodes in the radio coverage of the sending node. When node B sends the combined packet to the upstream node C, the packet may also be received by node A which then can examine the packet and determine whether its previously sent packet has been relayed or not. Thus, a relayed packet or a packet which has been merged may act as an acknowledgement packet for the previous packet to control a re-send mechanism. If no acknowledgement packet is received within a predetermined time interval, which is, *e*.*g*., set to two times the monitoring time period Tp, the previously sent packet should be re-sent.

In order to unambiguously direct the upstream packets towards the parent node, the response packet may contain a unicast address of the parent node so that all receiving nodes within the radio coverage may determine whether they are the next destination of the upstream packet on its way towards the network monitor. Other nodes, which are not identified by the packet destination address, may discard the received packet after having determined that the received packet is no acknowledgement packet for previously sent own packets.

It should be noted that the network monitor node of the tree root should also relay received response packets as acknowledgement packets in order to allow the determination of a reliable transmission for its neighboring nodes. In this case, the destination address of the relayed information message packet should be set to a dummy address, because the relayed packet must not be processed and relayed by any other node except the downstream node which needs it as acknowledgement packet.

Fig. 10 illustrates schematically the structure of an embodiment of the present invention. This embodiment has the advantage that manager and agents may have the same structure so that a node 40 can be a manager and/or an agent of other nodes at the same time. Manager and agents may be implemented using common software components. A node becomes a manager or an agent depending on the circumstances. In the present embodiment, all components may operate independently. Each component is activated when a signal is received from another component, or when a timer is expired.

The receiver 41 starts operating when a packet arrives. The concast controller 42 creates and maintains a concast tree. It identifies and stores the upstream parent node and the managing node of the tree (monitor). When initiated as a managing or monitoring node, the concast controller 42 causes the concast tree to be generated by the agents. When initiated as an agent node, the concast controller maintains and adapts the tree dynamically. A periodic observation unit 43 obtains information from the neighbors' table, MIB information or other information related to the node or connected network links. The periodic observation unit 43 obtains periodically the information requested by the monitoring request packets while the concast tree is maintained. A sender 44 sends monitoring requests and/or information messages. In addition, the sender 44 merges information which is collected from own devices of the node 40 or received from downstream nodes. Preferably, up to 1 kByte of information is merged into a packet and subsequently sent. The administration of the sent process for packets is organized by queues. A re-send administration unit 45 monitors the success of the relay of sent packets by other nodes and re-sends packets which have been sent but not relayed. The neighbors' table maintenance unit 46 maintains a neighbors' table comprising information on neighboring network nodes which are directly connected to the node via network links. An analyze and display unit 47 sorts and analyzes the received information when the node 40 is in a manager state.

The above structure allows an individual operation of the components which may preferably be implemented as event-driven objects. Each object has its own timer which is operating with its own clock. An object is triggered when a signal is received from another component or when the timer is expired. However, the receiver 41 starts operating when a packet arrives. An implementation according to this embodiment of the invention allows multithreading and a multiprocessor operation.

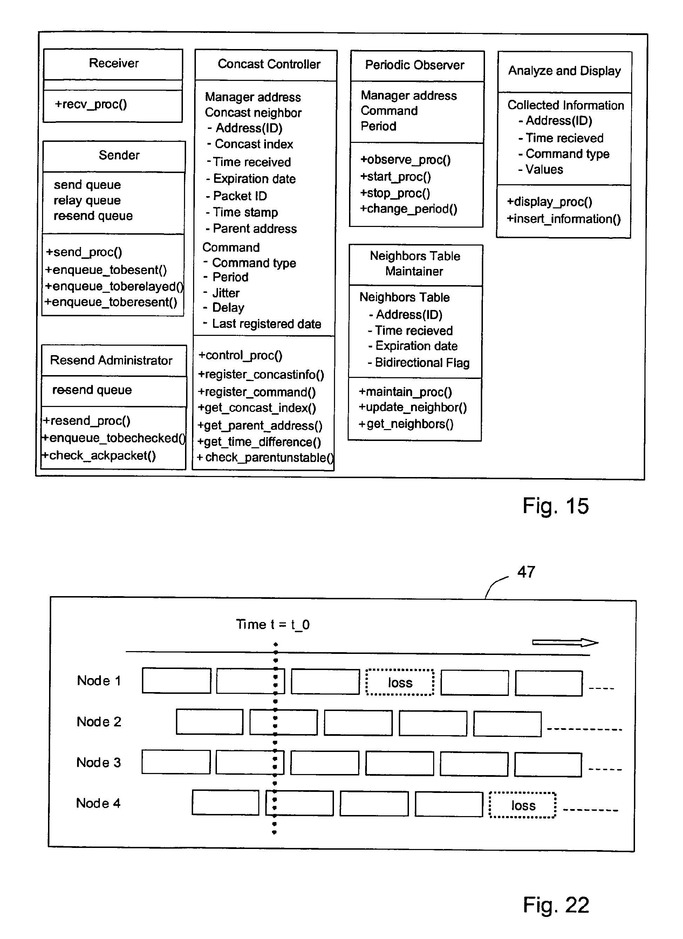

In Fig. 10 the interactions I - XIV between the different components are illustrated and explained in detail below. An arrow between a first component and a second component indicates that the first component uses a method of the second component in the class diagram illustrated in Fig. 15.
I) After handling and analyzing the header of a received packet, the receiver 41 registers a request command, indicating the information that the manager is collecting, with the concast controller 42. There, the necessary information in order to maintain the concast tree is updated.
II) The receiver 41 provides information on the neighbor node (e. g., the node address or identity) from which it has received a packet to the neighbors' table maintenance unit 46. There, a new node is added to the neighbors' table or existing information to a known node is updated.
III) The receiver 41 enqueues information received by information messages from downstream nodes which is to be relayed to upstream nodes into a sending queue maintained by the sender 44. There, the enqueued information is merged with other information and relayed to the next upstream destination node.
IV) The receiver 41 provides information on a received information message to the re-send administration unit 45, if the packet has been received from an upstream node. In this case, it may be an acknowledgement packet and the re-send administration unit 45 analyzes the packet to determine whether it corresponds to a previously sent information message.
V) If the node 40 is in a management or monitoring state, the receiver 41 provides the collected information to the analyze and display unit 47, where the information is analyzed and displayed.
VI) Based on received monitoring requests, the concast controller 42 starts, configures, and/or stops the periodic observation unit 43.
VII) If neighbor table information is requested from the monitor, the periodic observation unit 43 refers periodically to the neighbor table maintenance unit 46 in order to receive the requested information. The periodic observation unit 43 also refers periodically to the neighbor table information in order to broadcast it for maintaining the concast tree (e.g. for determining if a link is bi-directional).
VIII) In order to obtain the requested information, the periodic observation unit 43 may also refer periodically to the management information base. In addition, the periodic observation unit 43 may also retrieve other requested information, such as sensor data. For example, position data of the network node 40 may be read from a GPS unit by the periodic observation unit 43.
IX) When the timer indicating the monitoring time period Tp expires, the periodic observation unit 43 enqueues periodically the requested information into the queue of the sender 44.
X) If the node 40 is in the monitoring or managing state, the periodic observation unit 43 provides the requested information to the analyze and display unit 47.
XI) In order to prepare the sending of packets, the sender 44 inquires information on the network manager, the next upstream parent destination node, etc. from the concast controller 42. The inquired information is needed by the sender 44 to generate the packet header.
XII) After sending a response packet upstream to the parent node, the sender 44 provides a copy of the sent packet, or at least of the necessary information, to identify it to the re-send administration unit 45 in order to prepare the acknowledgement procedure. The packet is stored in the re-send administration unit 45, where it is compared with packets received from upstream nodes via interaction IV.
XIII) If the re-send administration unit 45 determines that the previously sent packet has not been relayed within a predetermined time period, because no corresponding acknowledgement packet has been received, the re-send administration unit 45 enqueues the respective packet that requires re-sending into the queue of the sender 44.
XIV) The re-send administration unit 45 informs the concast controller 42 on the situation where the current parent node is no longer adequate. This may happen because of the necessity of a packet re-transmission to the parent node. Preferably, the re-send administration unit 45 maintains a re-send counter for the parent node in order to allow a predetermined number of packet re-sendings before the parent node is considered to be inadequate and the concast controller 42 is informed thereof.

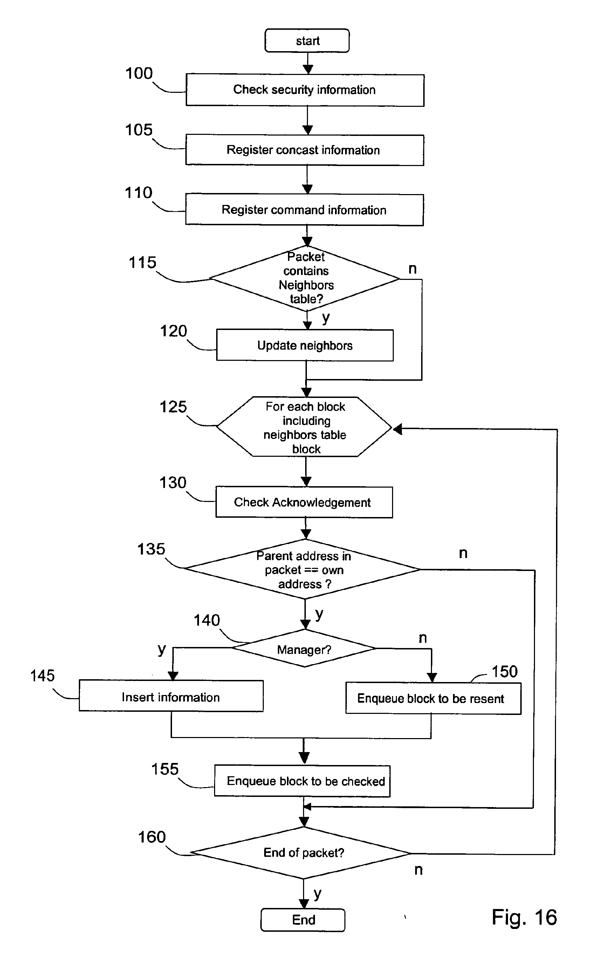

Fig. 11 shows schematically a state chart diagram for the operation of a timer component which is assigned to the other periodically operating components shown in Fig. 10. Each component in Fig. 10 has a timer component. The main methods of the components shown in the class diagram of Fig. 15 are operated in state T1. The procedure is started when the timer expires. The next point in time when the timer expires is calculated in the last step of the respective flow diagram of the component (cf. Figs. 16-21).

After the respective component is initialized, the timer enters state T1 where the associated component is executed and the timer is rescheduled. In state T2, the timer waits until the scheduled time expires and afterwards returns to state T1. If, during the waiting time, a signal is received, the timer is rescheduled and stays in state T2. After receiving a termination signal, the timer proceeds to step T3 for initiating a termination procedure.

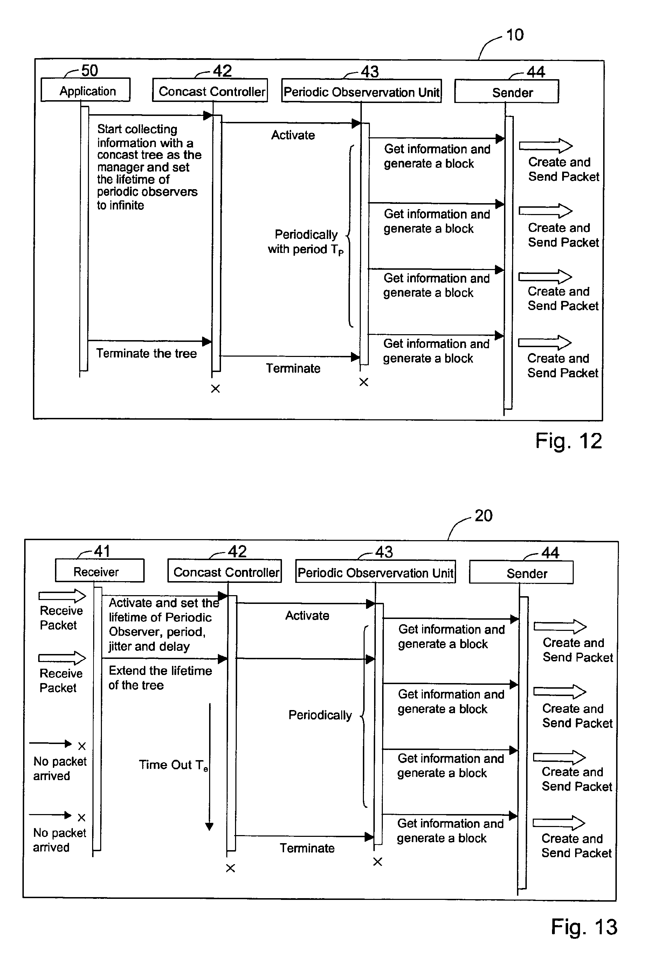

Fig. 12 shows schematically the flow of signals between components of a node 10 which acts as a manager. The concast controller 42 receives a start collection signal from an application 50. The concast controller 42 sets the lifetime of the periodic observation units, i. e., the expiration time interval Te, to infinity and activates the periodic observation unit 43 to generate a command block periodically with the monitoring time period Tp. The periodic observation unit 43 retrieves the necessary information and generates a command block according to the monitoring protocol packet format. The command block and the neighbor table of the monitoring node are enqueued in the sending queue of the sender 44 which generates the complete protocol packet and sends the packet by broadcast to all neighboring nodes. This process is repeated by the periodic observation unit 43 periodically every time the monitoring time period Tp expires. Thus, the network is periodically flooded with monitoring requests which are received by the neighbor nodes of the monitor 10 and relayed as long as the given relay condition is met.

The above process is terminated when the concast controller 42 receives a termination signal from the application 50. In this case, the concast controller 42 also terminates the periodic observation unit 43. From that time on, no command blocks and monitoring request packets are generated and sent to neighboring nodes. The sender component 44 may continue its operation and must be terminated, because it may be also utilized when the node operates as monitoring agent.

Fig. 13 shows schematically the flow of signals within a network node 20 acting as a monitoring agent.

The receiver 41 first receives a monitoring request packet from an upstream node and activates the concast controller 42. The lifetime of the periodic observation unit 43, *i*.*e*., the expiration time interval Te, is set under consideration of the monitoring time period Tp and an expected jitter and delay of the network transmission. This allows the setting of the expiration time interval Te such that a predetermined number of monitoring request packets may be missing before the periodic observation unit 43 is terminated. For example, the expiration time interval Te may be set to 2 x the monitoring time period Tp.

After the periodic observation unit 43 is activated, it obtains the requested information, *e.g*., from the neighbors' table maintenance unit 46 or by referring to the MIB of the node 20, generates a packet information block and enqueues the block in the sending queue of the sender 44. The sender 44 refers to its sending queue and creates and sends the respective information message.

Anytime a new monitoring request is received by the receiver 41, the lifetime of the concast' tree and the concast controller 42 is extended and a signal for rescheduling the expiration time interval Te of the periodic observation unit 43 is sent from the concast controller 42 to the periodic observation unit 43. If no request packet is received within the expiration time interval Te, the concast controller 42 and the periodic observation unit 43 are terminated. If, for example, Te is set to 2 x Tp, the absence of one request packet is tolerated and the monitoring process is terminated not until two consecutive monitoring requests are missing. This has the advantage that the agents may autonomously continue sending information messages for the predetermined time interval so that the monitoring is not terminated unintentionally.

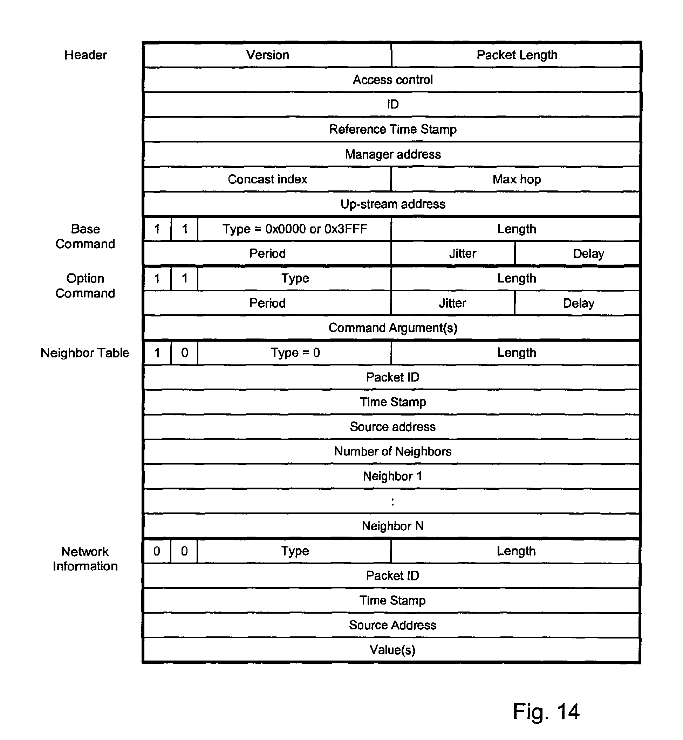

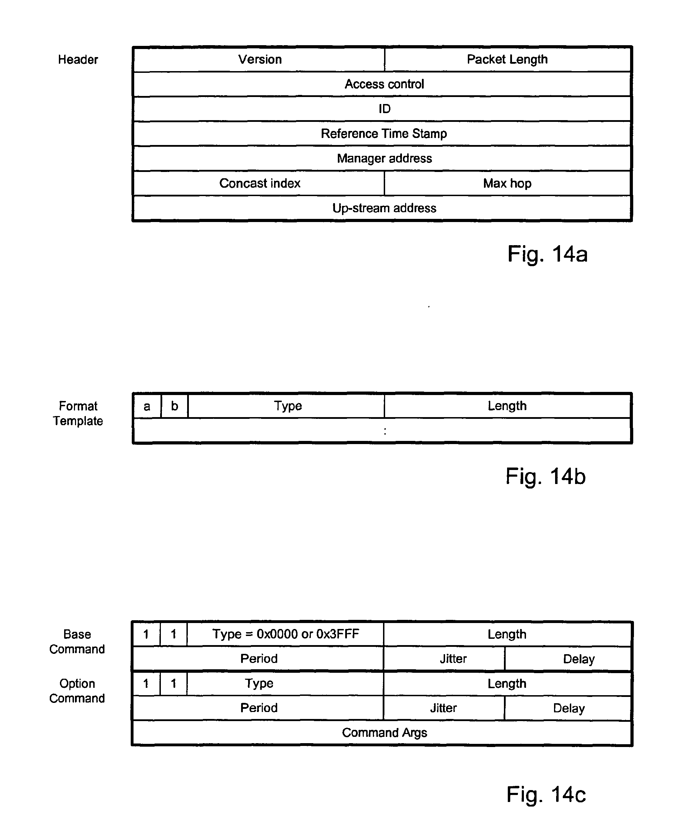

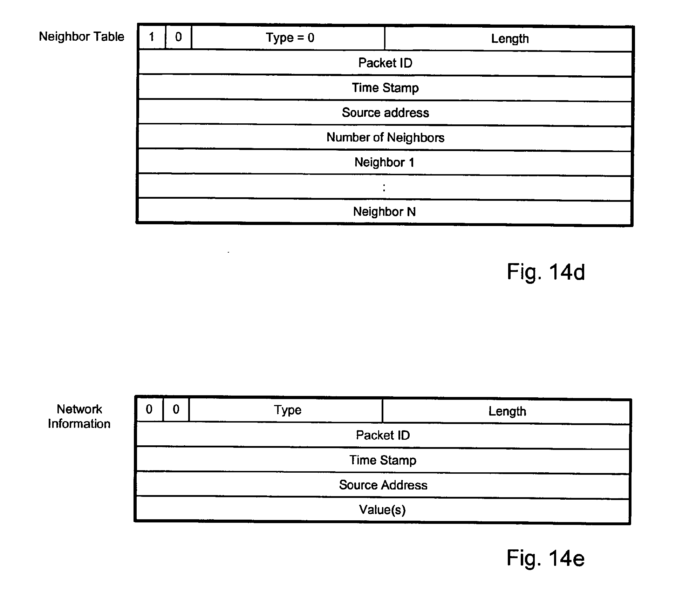

Fig. 14 shows schematically the packet format for a monitoring protocol according to one embodiment of the invention. The packet format comprises a header block, a base command block, an option command block, a neighbor table block, and a network information block.

The header block format is shown in Fig. 14a and has fields for version, packet length, access control information, packet ID, reference time stamp, manager address, concast index, max hop-count, and upstream address. The version field indicates the protocol version, *e*.*g*., 0 for the first version. The packet length field indicates the length of the packet.

The access control information field is intended for security purposes and may include a SNMP community name in order to provide SNMP level security. In an advanced implementation, security with a symmetric key can be applied by providing a message digest of the packet generated with a hidden private key. A packet receiver who has the private key can thus determine, if the packet is invalid or not. This mechanism prevents impersonating by unauthorized persons.

The packet ID field is set by the manager, *e*.*g*., as a sequence number. When an agent creates a packet, the latest ID that has been received should be used.

The reference time stamp field is set as the time when the information is obtained/referred. The receiver can determine the time difference between the sending node and the receiving node by assuming that the gap between the packet creating time and the receiving time can be ignored. In other words, it is assumed that the packet is delivered without delay. The packet sender should manage a standard clock time by managing the time difference to the upstream parent node. The standard clock time is defined to be the time of the manager node that initiated and maintains the concast tree. In case that there are a plurality of managers in the network, a respective number of standard clock times corresponding each to one manager should be maintained. When the packet is relayed, the header part of the packet is re-generated and a new reference time stamp is generated based on the actual time of the sender.

The manager address field includes the network address or identity of the monitoring or managing node. The concast index field indicates the position of the sending node in the concast tree with respect to the manager. The unit of this field is the hop-count. The max hop field indicates the maximum hop-count of the concast tree in order to limit the size of the tree. This field is set by the concast tree manager.

The upstream address field indicates the upstream parent node address of the packet when traveling upstream towards the network manager. For information messages this is the next destination of the packet. Since monitoring packets may be by broadcast or multicast, the packets are received by all available nodes in the neighborhood, *e*. *g*., by all nodes within the radio coverage of the sender in a wireless ad-hoc network. The received packets are analyzed by the receiving nodes and relayed when appropriate. Thus, the monitoring protocol is unicast routing protocol independent and may operate autonomously. So, it can be used to monitor the status of the unicast protocol and to manage it.

The common block form is shown schematically in Fig. 14b. The first bit a is the broadcast flag. If the broadcast flag a is set, all receiving nodes should consider the information in the block. This field should be on in the case of a command block and a neighbors' table block. The blocks dedicated for upstream nodes have the flag value off. The second bit b is the command flag. If this field b is on, the block is indicating what kind of information the manager is collecting. This allows specifying the requested information from the monitored nodes.

Fig. 14c shows schematically the command block format. The base command block is a mandatory block that indicates whether the manager is requiring neighbors' tables or not. If the value of the type field is 0x0000, the manager is collecting neighbors' information, and if the value of the type field is 0x3fff the manager is not requesting neighbors' information. The period field indicates how frequent the neighbor information should be exchanged, *i*.*e*., it specifies the monitoring time period Tp. The jitter and delay fields are used in order to avoid packet collisions. This means that, if the packet is relayed, the agent of the relaying node should wait to send the packet according to (jitter x random value + delay). The option command block indicates other information that the manager is collecting, such as information from a MIB. This is specified in the command arguments field. Plural commands can be stored in a packet.

Fig. 14d shows schematically the neighbors' table block format. The broadcast flag a is set to 1, if the neighbors' table is transmitted downstream, and it is set to 0, if the neighbors' table is transmitted upstream. In this case, the neighbors' table information is part of the requested information and is of no interest for the control of the monitoring protocol so that the respective block must not be noticed by receiving nodes. The type field is always set to 0. The packet ID field provides information necessary in order to judge whether it is necessary to re-send the packet again or not. It allows identifying a relayed packet as an acknowledgement packet. The time stamp field is set to the time when the information in the neighbors' table was created. It is generated by referring to the standard clock of the upstream parent node. The address of the sending node is stored in the source address field. The length of the neighbors' table is stored in the number of neighbors' field. The following fields make the list of neighbors' information. If the value of the type field of the base command equals 0, this information should be relayed to the upstream nodes with the broadcast flag a off. The neighbors' table block is generated periodically with the monitoring time period Tp. This block is not mandatory so that not all packets comprise this block.

Fig. 14e shows schematically the format of the information block. It is used to store information for upstream transmission towards the manager node. The information block format has basically the same structure as the neighbors' table block.

Fig. 15 illustrates schematically a class diagram for an object oriented implementation of an embodiment of the present invention. Preferably, the components are implemented as classes which inherit a timer thread class (timer component, see Fig. 11). This means that a component is activated when a timer expires or a signal from another component is received. The flow diagrams of Figs. 16-21 describe in detail the operation of the main methods of the classes.

Fig. 16 illustrates schematically the processing of the receiver 41. In step 100, it is determined whether a received packet meets the security condition. For instance, the receiver 41 may inquire information from the concast controller 42 in order to judge whether a received packet from a downstream node is valid. This allows providing security checks to be performed in order to prevent an infiltration from outside the concast tree. Invalid packets are silently discarded and nothing should be done. This step allows preventing the penetration of unauthorized monitoring requests or spurious information messages. In step 105, received concast information is registered with the concast controller 42. In step 110, received command information included in monitoring requests is registered with the concast controller 42. Thus, the requested information may be obtained from the periodic observation unit 43 which is activated by the concast controller 42 based on the registered commands. In step 115, it is determined whether the received packet contains a neighbor table. In the affirmative case, the neighbor table is updated in step 120 based on the information included in the received neighbor table and/or based on information of the sender of the received packet. Next, a loop is initialized in step 125 for each block including the neighbors' table block. In step 130, it is checked whether the packet has been received by an upstream node and may potentially be an acknowledgement packet. In this case, the packet is transferred to the re-send administration unit 45. In step 135, it is determined whether the parent destination address in the packet equals the network address of the receiving node (i.e. the packet is addressed to the node). If the packet is not addressed to the node, the packet is silently discarded and not relayed toward the monitor. If the destination address of the received packet is the address of the receiving node, it is determined in step 140 whether the node is in the manager state or not. In the affirmative case, the received information is provided to the analyzing and display unit 47 for further processing (step 145). If the node is not in the manager state, the block is enqueued in the sending queue in order to be relayed to the next upstream parent node (step 150). Next, the block is enqueued in step 155 in the packet transmission monitoring queue of the Resend Administrator (c.f. Fig. 15) in order to monitor that the sent packet is relayed by the next upstream node towards the network monitor. In step 130, it is checked whether a received block corresponds to the enqueued block and serves as an acknowledgement confirming the relay of the block. In step 160, it is determined whether the end of the received packet is reached. If more blocks are to be processed, the method returns to step 125 in order to process the next block. Otherwise, the processing of the received packet is terminated.

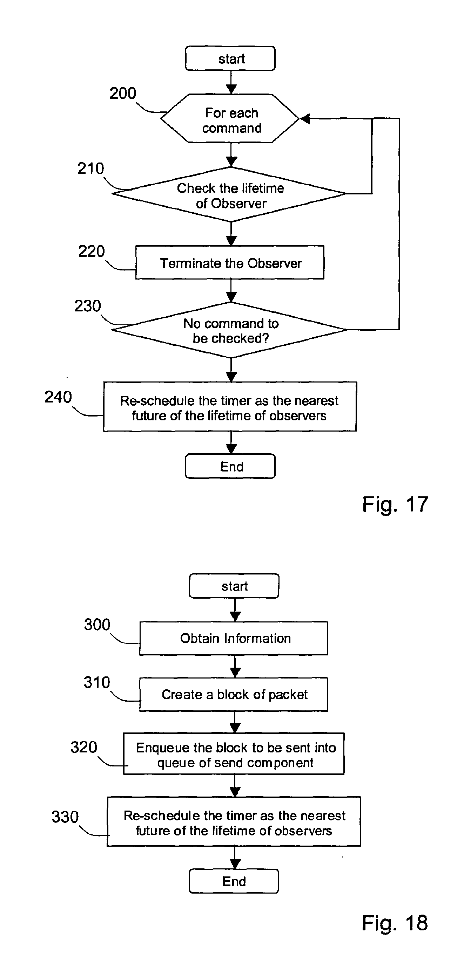

Fig. 17 shows a flow diagram for a control procedure provided in order to control the termination of the periodic observation unit 43. In step 200, a loop for each command received with a monitoring request is initialized. The lifetime of the periodic observation unit 43 is checked in step 210 based on the expiration time interval Te. If the expiration time interval Te is expired, i.e. is no new monitoring request has been received within the expiration time interval Te, the periodic observation unit 43 is terminated in step 220. Otherwise, the process continues in step 200 with the next command. In step 230, it is determined whether additional commands are available. If no more commands are available, the timer is rescheduled based on the expiration time interval Te and the next point in time for the determination of the lifetime of the periodic observation unit 43 is set. This procedure controls the lifetime of the concast tree and of the associated periodic observation unit 43.

Fig. 18 shows a flowchart of a control process performed by the periodic observation unit 43. In step 300, the periodic observation unit 43 obtains the requested information by referring to the neighbor table maintenance unit 46 and/or the MIB. The obtained information is used in step 310 in order to create an information block intended for a information message packet. The generated block is enqueued in step 320 into the sending queue of the sender 44. In step 330, the timer of the periodic observation unit is rescheduled based on the monitoring time period Tp. The next point in time for the periodic observation of the requested information is set.

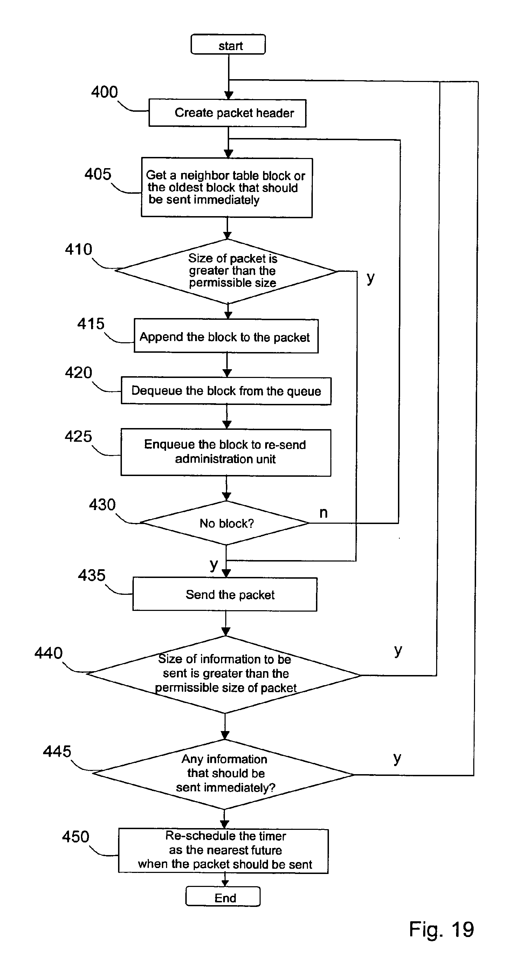

Fig. 19 shows a flow diagram of a control process performed by the sender component 44. In step 400, a packet header for the packet to be sent is created. A neighbor table block or the oldest block that should be sent immediately is obtained in step 405 from the sending queue. If the size of the packet is larger than the permissible packet size (step 410), the process jumps to step 435 to immediately send the packet. Otherwise, the block is appended in step 415 to the packet. Next, the block is dequeued in step 420 from the queue. In step 425, the block is provided to the re-send administration unit 45 for relay transmission control. In step 430, it is determined whether additional blocks are available. If so, the process continues with step 405 in order to obtain the next available block. Otherwise, the packet is sent in step 435. If the size of the information to be sent is larger than the permissible size of a packet (step 440), the process returns to step 400 to create a new packet header. Otherwise, in step 445 it is determined whether any information that should be sent immediately is available. In the affirmative case, the process continues to send the next packet in step 400. Otherwise, the timer of the sender 44 is rescheduled in step 450 as to the next point in time when a packet should be sent.

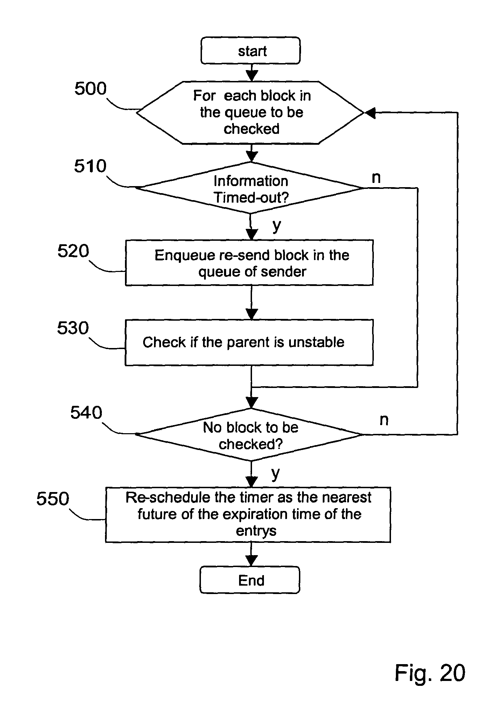

Fig. 20 shows a flowchart of a control process performed by the re-send administration unit 45. In step 500, a loop is initialized for each block in the queue to be checked. Then, in step 510 it is determined whether the information of the present block has timed-out. If no acknowledgement packet for the block has been received within the predetermined time period, the block is enqueued into the sending queue of the sender 44 in order to re-send the block to the next upstream node (step 520). In step 530, it is determined whether the parent node is stable or unstable. For this reason, re-send counters are maintained by the re-send administration unit 45. In case of the necessity of re-sending a block, the re-send counter for the parent node is incremented. If the re-send counter reaches a predetermined condition, the parent node is declared unstable and a respective signal is provided to the concast controller 42 in order to determine a new parent node. If in step 510 it is determined that the present block has not yet timed-out, the process jumps to step 540, where it is determined whether more blocks are available for processing. If additional blocks are available, the process continues in step 500 with the next block. In step 550, the timer of the re-send administration unit 45 is rescheduled as to the next point in time when the expiration time of Te expires.

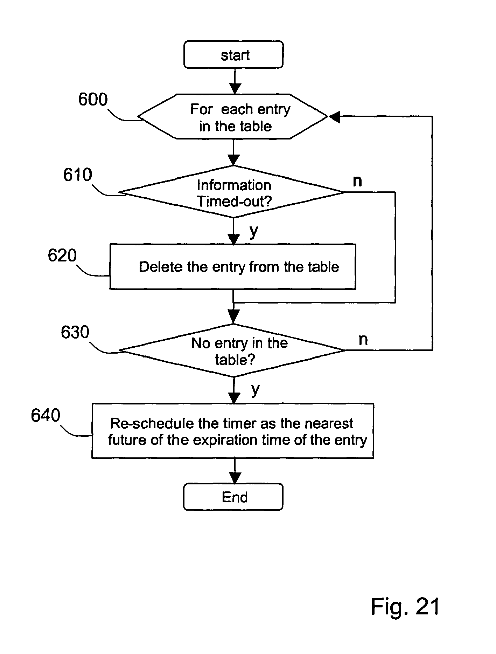

Fig. 21 shows a flow diagram of a control process performed by the neighbor table maintenance unit 46. In step 600, a loop is initialized for each entry in the neighbors' table. In step 610, it is determined whether the information of the present entry has timed-out. If the lifetime of the entry has expired, the respective entry is deleted in step 620 from the table. This helps to maintain the neighbor table up to date because old entries for which no confirmation has been received are deleted after a while. If in step 610 it is determined that the neighbors' table entry is still valid, the process continues in step 630 by determining whether additional entries are available from the table. If so, the next entry is selected in step 600. Otherwise, the timer of the neighbor table maintenance unit 46 is rescheduled in step 640 by setting the timer to the next point in time when the neighbor table entry expires.

Fig. 22 illustrates schematically the operation of the analyzing and display unit 47. In order to obtain a snapshot of the network information, the analyze and display unit 47 stores, orders and/or displays the received blocks for the individual network nodes. In Fig. 22 the received information for nodes 1-4 are arranged in separate rows. The received information is arranged according to the observation time, wherein the time proceeds from left to right. Missing blocks for time slots are indicated. Based on the displayed information, a network operator may decide on necessary network management operations in order to enhance the stability of the network. The received information from the monitored network nodes may also be input to an automatic network management unit which may readjust network parameters to improve network performance, stability, etc.. This example for displayed network information is only intended to illustrate one preferred embodiment. Many other useful arrangements are apparently for an expert.

Although the present invention has been explained by referring to embodiments for mobile ad-hoc networks, it is not limited to the specific embodiments exemplified. It will be appreciated by a person skilled in the art that the present invention may be applied to other types of networks and many modifications may be made to the embodiments described above without leaving the scope of the invention.

## Claims

1. Method for monitoring a plurality of network nodes (20, 20A, 20B) in a communication network (30), comprising
sending a monitoring request RQ to at least two network nodes (20, 20A, 20B) for instructing the receiving network nodes (20, 20A, 20B) to periodically send information messages IM comprising monitored information; and
receiving information messages IM from responding network nodes (20, 20A, 20B).

2. Method according to claim 1, wherein said monitoring request RQ comprises data for specifying information to be monitored at a network node (20, 20A, 20B) receiving the monitoring request RQ.

3. Method according to claim 1 or 2, wherein said monitoring request RQ indicates a monitoring time period Tp, the method further comprising the steps of:
upon receiving said monitoring request RQ, setting a periodic timer at a monitored network node (20, 20A, 20B) based on the received monitoring time period Tp; and
sending information messages IM periodically each time when the timer expires.

4. Method according to any of claims 1 to 3, further comprising the steps of:
upon receiving said monitoring request RQ, setting an expiration time interval Te; and
sending information messages IM periodically until the expiration time interval Te elapses.

5. Method according to any of claims 1 to 4, wherein, in case a predetermined forward condition is met, a network node (20) which receives a monitoring request RQ forwards the received monitoring request RQ in a downstream direction to other nodes (20A, 20B).

6. Method according to any of claims 1 to 5, wherein a network node (20), upon receiving a monitoring request RQ, tests whether the received monitoring request RQ meets the predetermined forward condition, and in the positive:
sets a periodic timer based on the monitoring time period Tp; and
sends periodically, each time when the timer expires, a monitoring request RQ to other nodes (20A, 20B).

7. Method according to claim 6, wherein a network node (20) which sends monitoring requests RQ sets an expiration time interval Te when receiving a monitoring request RQ, and discontinues sending monitoring requests RQ when the expiration time interval Te expires before a new monitoring request RQ is received.

8. Method according to any of claims 5 to 7, wherein a set of network nodes (20, 20A, 20B) to be monitored is determined based on a network distance condition, in particular a packet hop count, and the received monitoring request RQ is forwarded by the receiving node if the network distance condition is fulfilled.

9. Method according to at least one of claims 1 to 8, wherein the monitoring request RQ and/or the information message IM are/is transmitted in a respective network packet which comprises a broadcast flag to indicate that the packet is intended for all listening nodes (20, 20A, 20B), wherein, if the broadcast flag is set, the packet is transmitted in the network (30) by broadcast or multicast transmission.

10. Method according to at least one of claims 1 to 9, wherein the monitoring request RQ and/or the information message IM comprise(s) a security information field to determine whether the received monitoring request RQ or information message IM and/or its content is authentic.

11. Method according to at least one of claims 1 to 10, wherein a network node (20), which receives an information message IM, forwards the received information message IM, in particular after waiting a random delay time.

12. Method according to at least one of claims 1 to 11, comprising the step of determining an upstream link by identifying an upstream node for sending information messages IM upstream towards the network monitor node (10), wherein a hierarchical tree of nodes develops from the plurality of upstream links determined in the nodes, the monitoring node (10) being arranged at the tree root.

13. Method according to claim 12, wherein the upstream link of a node is determined based on properties of monitoring requests RQ received from other network nodes, in particular the network distances that the received monitoring requests RQ have traveled in the network from the monitoring node, such as the hop counts of the received monitoring requests RQ.

14. Method according to claim 12 or 13, wherein the upstream link of a node is determined based on link properties regarding network links between the node and other network nodes.

15. Method according to at least one of claims 1 to 14, wherein a monitoring request packet comprises neighbor information of the sending node, the neighbor information indicating the network nodes from which the sending node has received packets.

16. Method according to at least one of claims 1 to 15, comprising the step of maintaining a neighbor table for storing information relating to network nodes in the network neighborhood of the node.

17. Method according to at least one of claims 1 to 16, comprising the step of maintaining a management information database for storing information relating to the communication network (30) and/or the network node (20), wherein a monitoring request RQ demands information from the management information database.

18. Method according to at least one of claims 1 to 17, comprising the step of aggregating monitored information before sending an information message IM upstream towards the network monitor node (10).

19. Method according to claim 18, comprising the steps of:
saving an information message IM received from a downstream node during the monitoring time period Tp of the receiving node (20);
combining the received information with the monitored information of the node (20); and
sending an information message IM comprising the combined information upstream towards the network monitor node (10).

20. Method according to at least one of claims 1 to 19, comprising the step of comparing an information message IM received from another node to an information message IM previously sent in order to determine whether the previously sent information message IM has been forwarded by the other node.

21. Method according to claim 20, wherein a node re-sends an information message IM packet, if the node determines that the previously sent information message IM packet has not been forwarded by the other node within a predetermined time interval.

22. Method according to at least one of claims 1 to 21, comprising the step of synchronizing a clock of a node which receives a monitoring request RQ with a clock of the monitoring node (10).

23. Method according to at least one of claims 1 to 22, wherein the transfer of monitoring requests RQ and/or information messages IM in the network is independent of a routing protocol deployed in the communication network (30).

24. Apparatus for monitoring a plurality of network nodes (20, 20A, 20B) in a communication network (30), comprising
monitoring request sending means (11) adapted to send a monitoring request RQ via the communication network (30) to at least two network nodes (20, 20A, 20B), wherein a monitoring request RQ instructs the receiving network nodes (20, 20A, 20B) to periodically send information messages IM; and
information message receiving means (12) adapted to receive information messages IM via the communication network (30) from network nodes (20, 20A, 20B), wherein the information messages IM comprise the requested monitored information.

25. Network device for use in a communication network (30) having a plurality of network nodes (20, 20A, 20B), comprising
monitoring request receiving means (21) adapted to receive, via the communication network (30), monitoring requests RQ from a network monitor (10); and
information message sending means (22) adapted to periodically send information messages IM comprising the requested monitored information via the communication network (30) to the network monitor (10).

26. Network device according to claim 25, comprising timer means (23) adapted to periodically trigger the sending of information messages IM based on a predetermined monitoring time period Tp or a monitoring time period Tp received with the monitoring request RQ.

27. Network device according to claim 25 or 26, comprising monitoring request forwarding means (24) adapted to send a monitoring request RQ to other network nodes (20A, 20B), if a predetermined forward condition is met.

28. Network device according at least one of claims 25 to 27, comprising information message forwarding means (25) adapted to forward a received information message IM.

29. Network device according at least one of claims 25 to 28, comprising neighbor table maintenance means (26) adapted to store information relating to network nodes (20, 20A, 20B) in the neighborhood of the network device (20).

30. Network device according at least one of claims 25 to 29, comprising management information database means (27) adapted to store information relating to the communication network (30) and/or the network device (20), the stored information being accessible to the network monitor (10) via a monitoring request RQ.

31. Network device according at least one of claims 25 to 30, comprising concast control means (28) adapted to determine an upstream link for sending an information message IM upstream towards the network monitor node (10), and to aggregate monitored information before sending an information message IM upstream towards the network monitor (10).

32. Network device according at least one of claims 25 to 31, comprising transmission control means (29) adapted to control the transmission of information messages IM by determining whether a sent information message IM has been forwarded by another network node (20A, 20B).

33. Communication network comprising
a plurality of network devices (20, 20A, 20B) according to at least one of claims 24 to 31, and
at least one apparatus (10) for monitoring the network devices according to claim 23.

34. Computer program product directly loadable into the internal memory of a digital computer, comprising software code portions for performing the steps of at least one of claims 1 to 23 when said product is run on the computer.
